# EUROPEAN PATENT SPECIFICATION

(11) **EP 0 482 952 B1**
(45) Date of publication and mention of the grant of the patent: **20.12.1995**
(21) Application number: 91309897.6
(22) Date of filing: 25.10.1991
(51) Int. Cl.: B60R 16/02

(54) **Method of data communication in communication network on automobile**
Verfahren zur Datenübertragung in einem Kraftfahrzeugübertragungsnetz
Méthode de communication de données dans un réseau de communication d'automobile

(30) Priority: 25.10.1990 JP 288212/90; 25.10.1990 JP 288213/90; 25.10.1990 JP 288219/90; 25.10.1990 JP 288221/90; 25.10.1990 JP 288222/90
(43) Date of publication of application: 29.04.1992
(73) Proprietor: PIONEER ELECTRONIC CORPORATION, Meguro-ku Tokyo-to (JP)
(72) Inventor: Shimotsuma, Hiroshi, c/o Pioneer Electronic Corp., Kawagoe-shi, Saitama-ken (JP); Gou, Yasunao, c/o Pioneer Electronic Corp., Kawagoe-shi, Saitama-ken (JP); Ikata, Yoshikatsu, c/o Pioneer Electronic Corp., Kawagoe-shi, Saitama-ken (JP); Kimura, Toshiyuki, c/o Pioneer Electronic Corp., Kawagoe-shi, Saitama-ken (JP)
(74) Representative: Brunner, Michael John

(56) References cited:
- EP-A- 0 319 271
- DE-A- 3 624 456
- IEEE TRANSACTIONS ON VEHICULAR TECHNOLOGY vol. 38, no. 3, August 1989, NEW YORK pages 140 - 147 ABUL MASUR 'DIGITAL SIMULATION OF AN AUTOMOTIVE MULTIPLEXING WIRING SYSTEM'
- INSTITUT OF MECHANICAL ENGINEERS 1985, NETHERLANDS pages 227 - 230 VAN VELDHUIZEN 'PROPOSAL FOR AN AUTOMOTIVE MULTIPLEX WIRING SYSTEM'

## Description

The present invention relates to a method of data communication in a communication network on an automobile, and more particularly to a method of data communication in a network of components of an audiovisual system on an automobile.

### Description of the Prior Art:

In recent years, automobile audio systems have been changing from systems which give a user only audio information such as music to systems which allow the user to enjoy both audio and visual capabilities are known as audiovisual systems.

Automobile audiovisual systems on automobiles are composed of many different audio and visual composents. The audio components include a cassette tape deck, a radio tuner, a CD (Compact disc) player, etc., while the visual components include a TV (television) tuner, a navigation system, etc. Audio signals produced by some of these components are amplified by an amplifier and reproduced from loudspeakers in the automobile. Video signals produced by other components are displayed on a displayed on a display unit in the automobile. Today, the audiovisual system components are controlled according to digital technology, i.e., by respective controllers in the form of microcomputers.

The components of an audiovisual system are required to be controlled systematically for systematic operation of the components. To meet this requirement, the controllers of the respective components are connected by a communication bus network, so that control data for the components will be transmitted through the communication bus.

In the conventional audiovisual system network, the controllers of the components are controlled by a polling process. According to the polling process, either one of the controllers is given a priority status and handled as a master unit, with the other controllers as slave units, and when the master unit is to collect data from a slave unit, the master unit always accesses the slave unit, i.e., initiates the transfer to the data from the slave unit. When the master unit transmits communication data to a slave unit for access or the slave unit transmits data back to the master unit, it is necessary that the controllers be identified or specified. For this purpose, the controllers are allotted respective addresses identification themselves.

Heretofore, the controllers are allotted respective unique addresses. Control data which are to be given to controllers comprise address data peculiar to the respective controllers and instruction data (e.g., start command: On data) added to the address data. Therefore, there are as many items of communication data which are sent to the communication bus as the number of components connected to the communication bus.

Problems with the conventional network by which the controllers are connected are that there are many communication data to be transmitted to and from the communication bus and the communication data are complex. More specifically, there are many commands of communication data transmitted from the master unit, and those commands are of fixed nature which are predetermined with respect to the connected components. If, therefore, a new component is to be added for expanding the audiovisual systems, then the number of commands must be increased for the added component.

EP-A-0319217 discloses a multiplex transmission system with a transmission node and plurality of receiving nodes.

It is an object of the present invention to provide a method of data communication in a communication network on an automobile, which method can simplify a system of commands of communication data, allows an audiovisual system to be expanded easily, and also permits added components to be connected with increased freedom.

According to the present invention, there is provided a method of data communication in a communication network in an automobile, including a master unit and at least one slave unit which are connected to a common communication bus, the method comprising the steps of:
allotting physical addresses to the master and slave units, respectively, the physical addresses representing the master and slave units, respectively; and
transmitting communication data to the communication bus for communication between the master and slave units; characterised by the steps of:
allotting logical addresses to the master and slave units, respectively, the logical addresses representing the functions of the master and slave units, respectively;
combining the physical and logical addresses to generate address data; and in that:
the step of transmitting communication data includes transmitting the generated address data to the communication bus.

The physical addresses and the logical addresses that are allotted are independent of each other. To effect data communication from one unit to another unit, i.e., a destination unit, the one unit generates communication data composed of address data, i.e., a combination of physical and logical addresses of the another unit, and other data added thereto, and transmits the communication data to the destination unit. The transmitted communication data are sent over the communication bus to the destination unit that is specified by the physical and logical addresses. The destination unit then executes the contents of the communication data received.

For example, it is assumed that the master unit has two functions, e.g., a tuner and a tape deck. When communication data containing a certain command is to be transmitted from a slave unit to one of the functions (e.g., the tuner) of the master unit, the communication data is composed of address data in the form of physical and logical addresses, the logical address indicating the tuner, and other data added thereto that represents the command. When communication data containing a certain command is to be transmitted from a slave unit to the other function (e.g., the tape deck) of the master unit, the communication data is composed of address data in the form of physical and logical addresses, the logical address indicating the tape deck, and other data added thereto that represents the command. Therefore, in the case where the master unit has a plurality of different functions, the desired communication data may be transmitted to one of the functions of the master unit by changing only the logical addresses with the physical address remaining the same. It is not necessary to establish as many initially fixed addresses as the number of available functions. This simplifies a command system for communication data. Even when a new component or function is added, only its physical and logical functions or only its logical function needs to be added to allow the new component or function to be connected. Accordingly, the communication network system, e.g., an audiovisual system, can be expanded easily, and a component or components can be connected to the system with increased freedom.

The above and other objects, features and advantages of the present invention will become more apparent from the following description when taken in conjunction with the accompanying drawings in which preferred embodiments of the present invention are shown by way of illustrative example.

In the accompanying drawings:
FIG. 1 is a block diagram of a power supply circuit for an audiovisual system;
FIG. 2 is a block diagram of an audiovisual system incorporating a method of data communication according to an embodiment of the present invention;
FIG. 3 is a block diagram of a control network of the audiovisual system;
FIG. 4 is a block diagram of a specific arrangement in which a master unit and a slave unit are connected to each other;
FIG.5 is a block diagram of another specific arrangement in which a master unit and a slave unit are connected to each other;
FIG. 6 is a diagram of a transfer format of communication data;
FIG. 7 is a diagram of major classification data;
FIG. 8 is a diagram of subclassification data;
FIG. 9 is a diagram of basic data formats;
FIG. 10 is a diagram showing physical addresses;
FIG. 11 is a diagram showing physical addresses;
FIG. 12 is a diagram showing logical addresses;
FIG.13 is a diagram illustrative of an example in which physical and logical addresses are assigned;
FIG. 14 is a diagram showing a communication process by way of example;
FIG. 15 is a diagram of a master unit and an additional slave unit which is newly connected;
FIG. 16 is a block diagram of a data communication system according to a second embodiment of the present invention;
FIG. 17(A) is a diagram of a format of transmission data in the second embodiment;
FIG. 17(B) is a diagram of a format of return data in the second embodiment;
FIG. 18(A) is a diagram of a basic format of return data indicating that data as determined by check sum data is correct;
FIG. 18(B) is a diagram of a basic format of return data indicating that data as determined by check sum data id in error;
FIG. 19 is a block diagram of communication data according to a third embodiment of the present invention;
FIG. 20(A) is a diagram of a format of physical status data of the master unit;
FIG. 20(B) is a diagram of a format of physical status data of a slave unit;
FIG. 21 is a block diagram of communication data according to a fourth embodiment of the present invention;
FIG. 22 is a block diagram illustrating, by way of example, a switching sequence for source devices in the fourth embodiment;
FIG. 23 is a timing chart of the switching sequence; and
FIG. 24 is a diagram showing, in specific detail, an example of the switching sequence.

### (1) First Embodiment:

### POWER SUPPLY OF AUDIOVISUAL SYSTEM

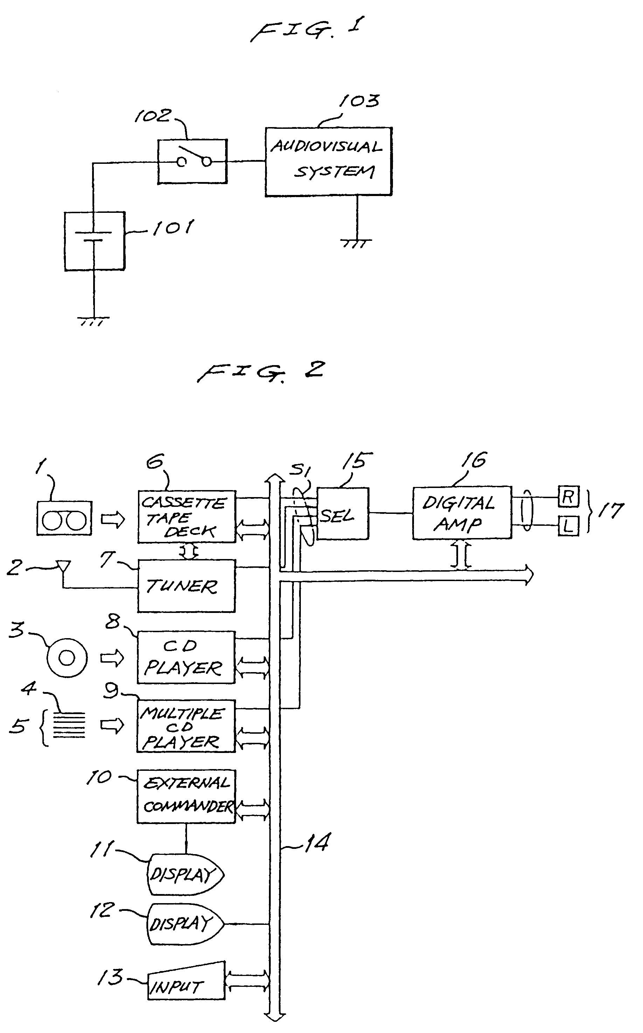

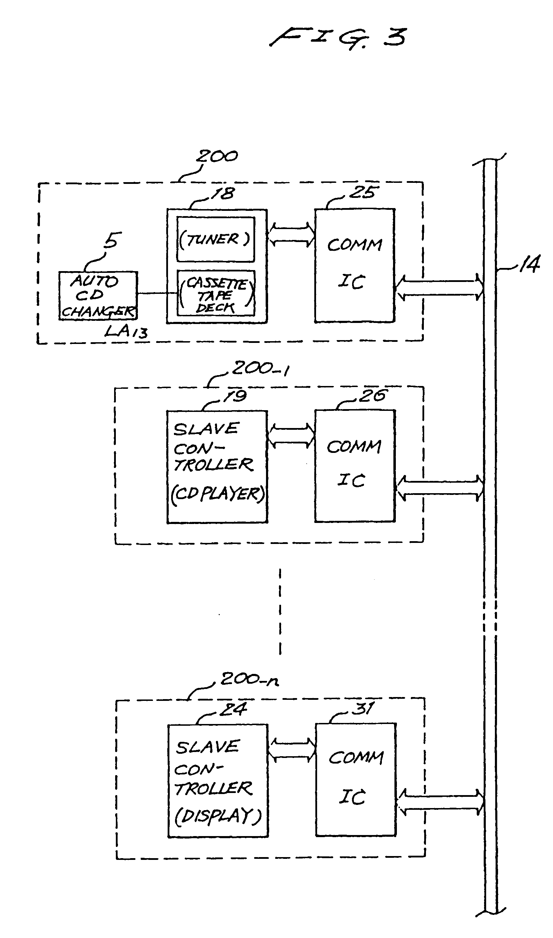

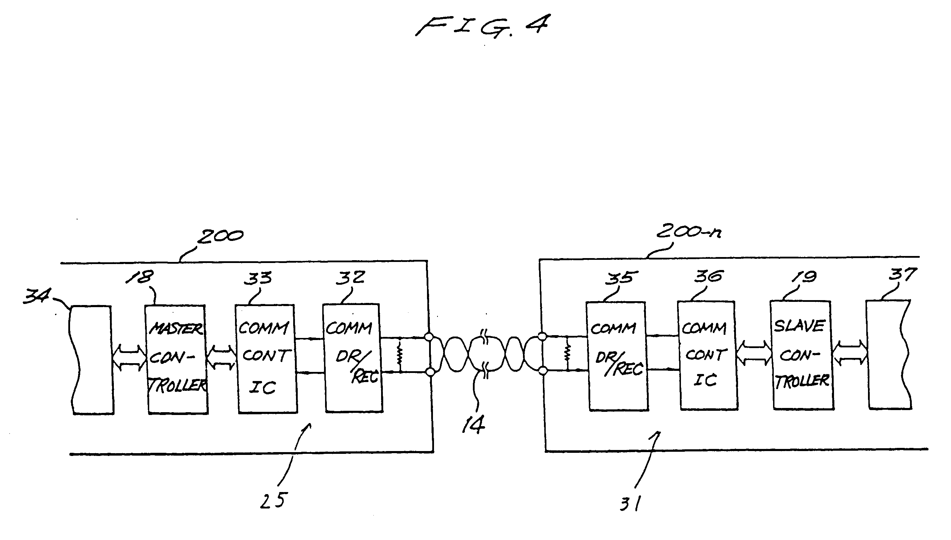

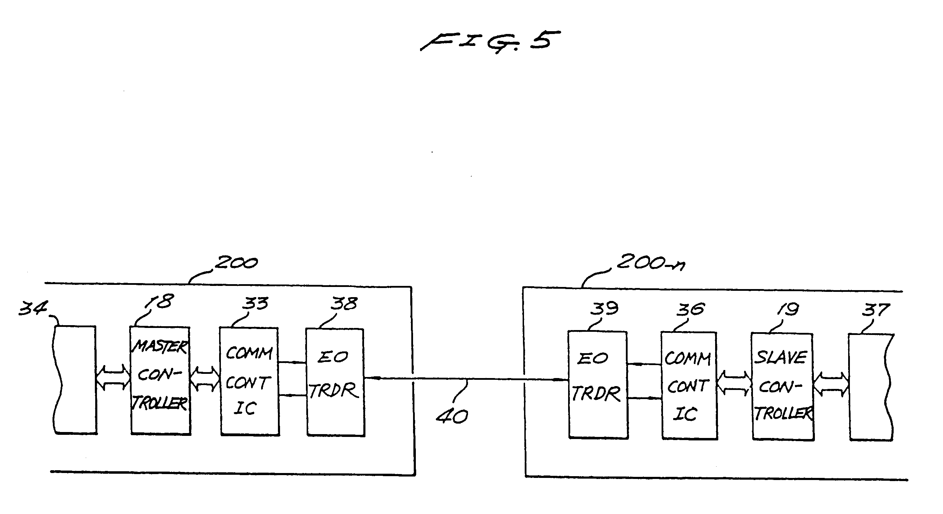

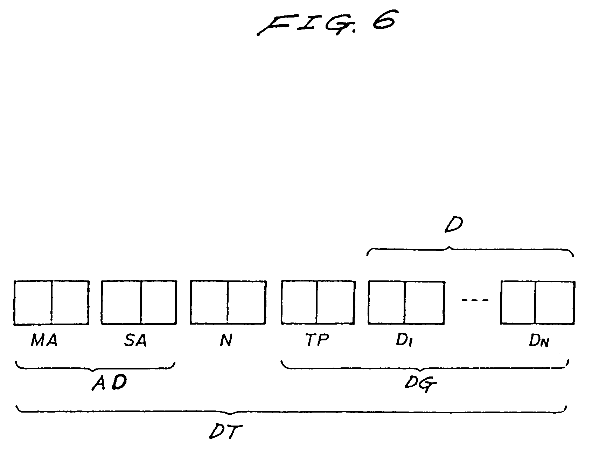

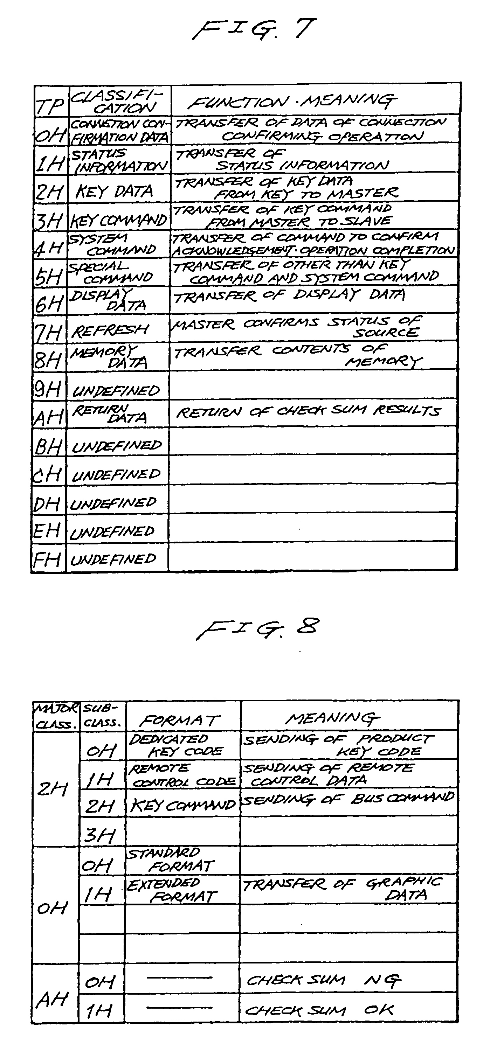

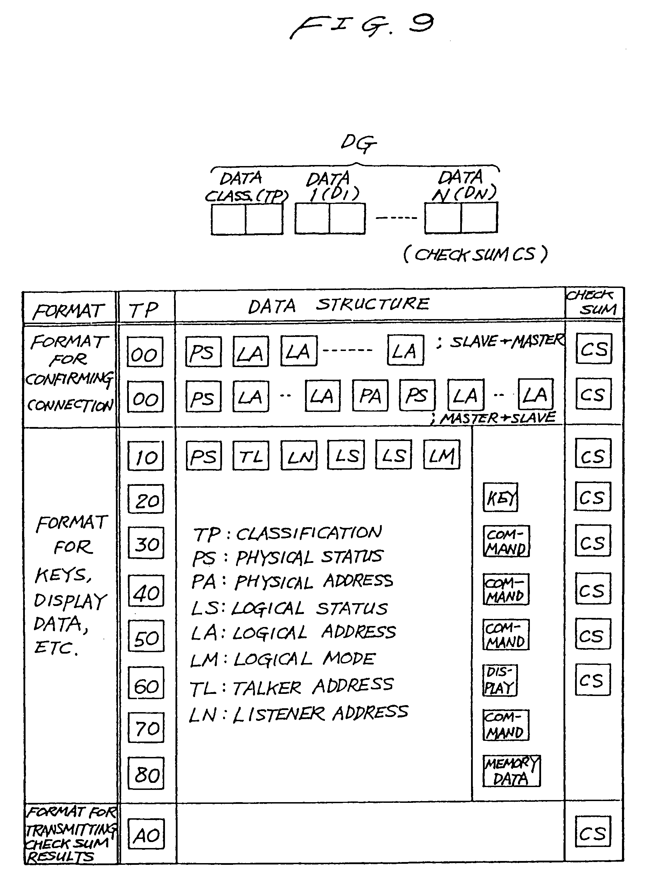

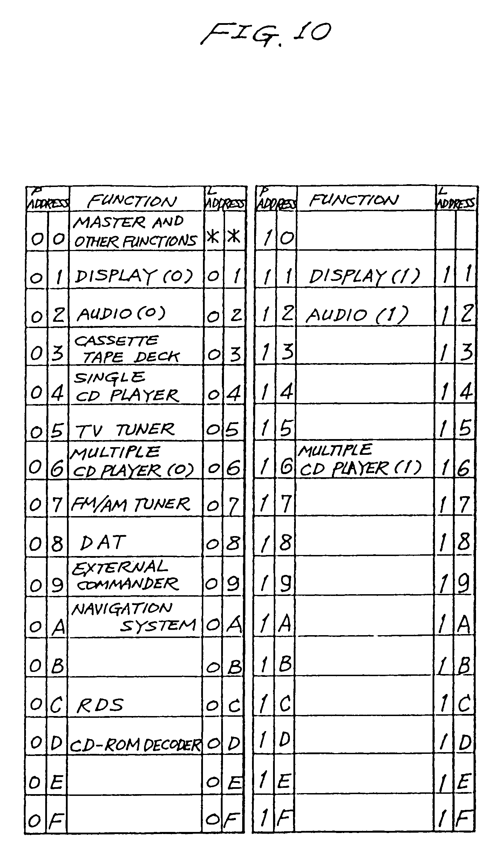

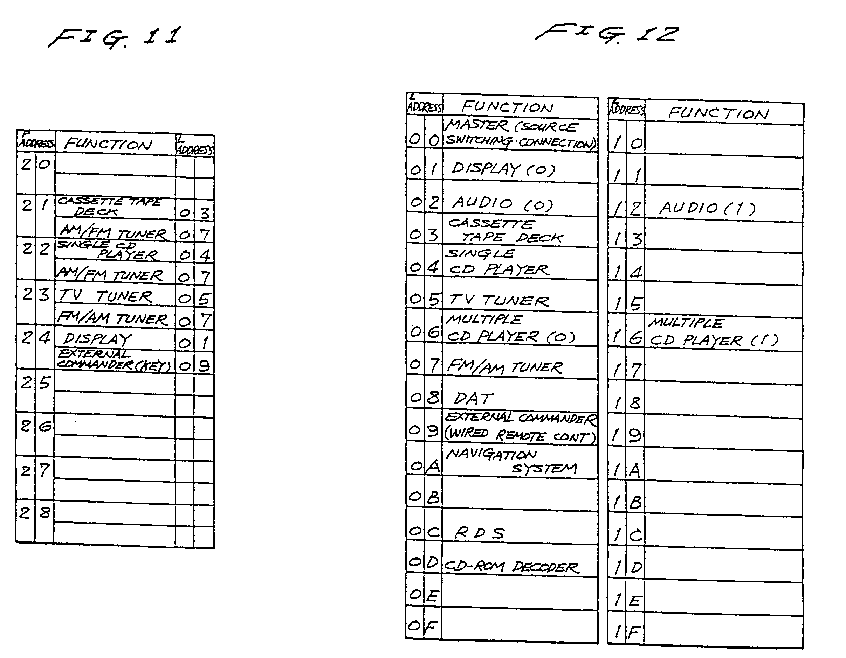

The principles of the present invention are particularly useful when embodied in an audiovisual (AV) system on an automobile. As shown in FIG. 1, the audiovisual system, denoted at 103, is supplied with electric energy from a battery 101 through an ACC switch 102. The ACC switch 102 is assembled together with an engine start keyswitch of the automobile. When the engine key inserted in the engine start keyswitch is turned to the position of the ACC switch, the accessories on the automobile are energized by the battery 101. Therefore, the audiovisual system 103 is turned on or off each time the engine key is turned in the engine start keyswitch.

### ARRANGEMENT OF AUDIOVISUAL SYSTEM

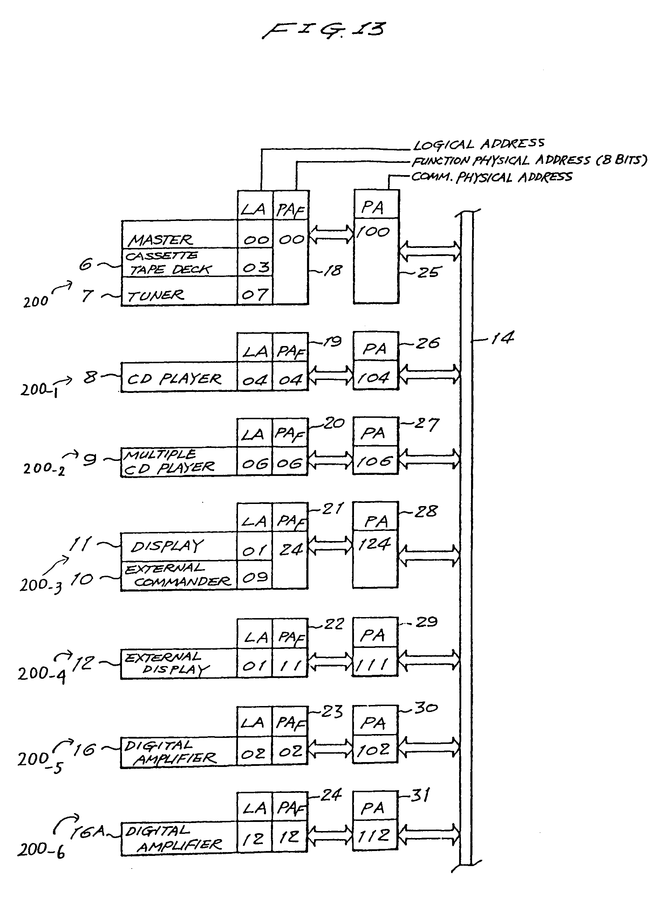

FIG. 2 shows a detailed systematic arrangement of the audiovisual system. The audiovisual system has audio reproducing components and visual reproducing components. The audio reproducing components include a cassette tape deck 6 for reproducing recorded audio signals from a cassette tape 1, a tuner 7 such as an AM/FM tuner for reproducing radio signals which are received by an antenna 2, a CD player 8 for reproducing recorded signals from a CD 3, and a multiple CD player 9 having an automatic CD changer 5 for reproducing recorded signals from multiple CDs 4. The visual reproducing components include a TV tuner contained in the tuner 7, for reproducing TV signals received by the antenna 2, and a display unit 12 for displaying images based on the TV signals and also displaying still images based on signals from the CD player 8 if a CD-ROM is played back by the CD player 8. Typically, a CD-ROM is employed by a navigation system. The audiovisual system has an external commander 10 which is in the form of a keyboard for entering various operation commands. A display unit 11 is connected to the external commander 10. The audiovisual system also has an input unit 13, which may be incorporated in the external commander 10.

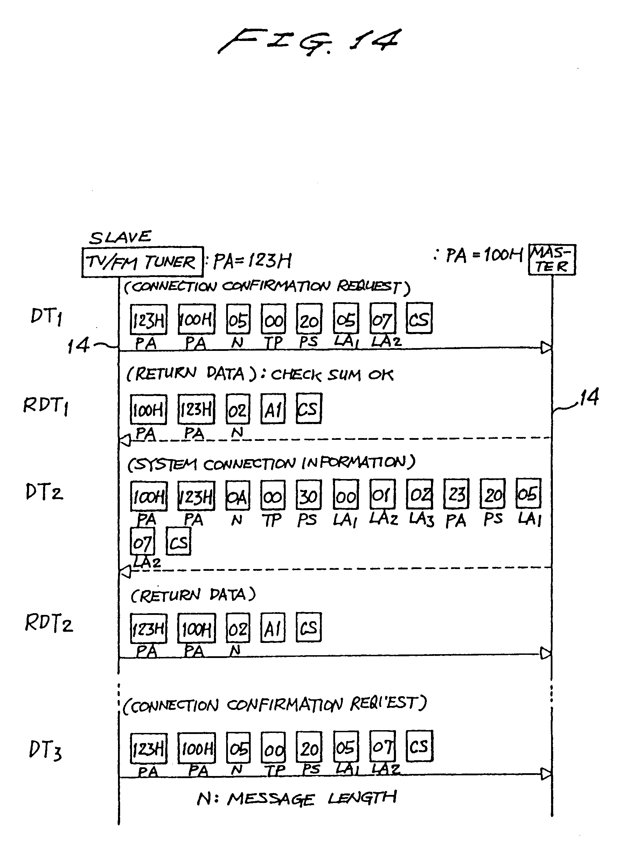

The above components of the audiovisual system have respective controllers for controlling their own operation. These controllers are connected to each other through a communication bus 14, thereby making up a communication bus control network. The control network is shown in FIG. 3, and will be described in detail later on.

Reproduced signals from the audio reproducing components are selectively applied through a selector 15 to a digital amplifier 16. After the reproduced signal has been amplified by the digital amplifier 16, it is applied to loudspeakers 17 from which reproduced sounds are radiated. The digital amplifier 16 contains a digital signal processing circuit which is controlled by a controller in the digital amplifier 16, the controller being connected to the communication bus 14.

### CONTROL NETWORK OF AUDIOVISUAL SYSTEM

FIG. 3 shows the control network in detail. For the purpose of description, the audiovisual system components connected to the communication bus 14 as shown in FIG. 2 will hereinafter be referred to as "units". As shown in FIG. 3, these units are connected to the communication bus 14 parallel to each other. Either one of these units is selected as a "master" unit, indicated by 200, for controlling the control network, while the other units serve as "slave" units, indicated by 200₋₁ to 200₋ₙ.

The master unit 200 has a master controller 18 connected through a communication interface IC 25 to a communication bus 14. The master controller 18 indicates controllers for controlling the cassette tape deck 6 and the tuner 7. The controller for the cassette tape deck 6 also controls the automatic CD changer 5. The slave units 200₋₁ - 200₋ₙ have respective slave controllers 19 - 24 which are also connected to the communication bus 14 through respective communication interface ICs 26 - 31.

FIG. 4 shows a specific arrangement in which the master unit 200 and the slave unit 200₋ₙ are connected to each other. The master unit 200 and the slave unit 200₋ₙ are connected to each other by the communication bus 14. The communication bus 14 comprises a twisted pair of conductors. Communication data DT transferred through the communication bus 14 is transmitted and received by the communication interface ICs 25, 31 of the master unit 200 and the slave unit 200₋ₙ, respectively. The communication interface IC 25 is divided into a communication driver/receiver 32 and a communication control IC 33. Likewise, the communication interface IC 31 is divided into a communication driver/receiver 35 and a communication control IC 36. Heretofore, the communication driver/receiver and the communication control IC have been integrally combined in one IC. The communication control IC 33 is composed of a CMOS transistor, while the communication driver/receiver 32 is composed of a bipolar transistor of high current-driven capability. The communication driver/receiver 35 and the communication control IC 36 are of the same structures as the communication driver/receiver 32 and the communication control IC 33.

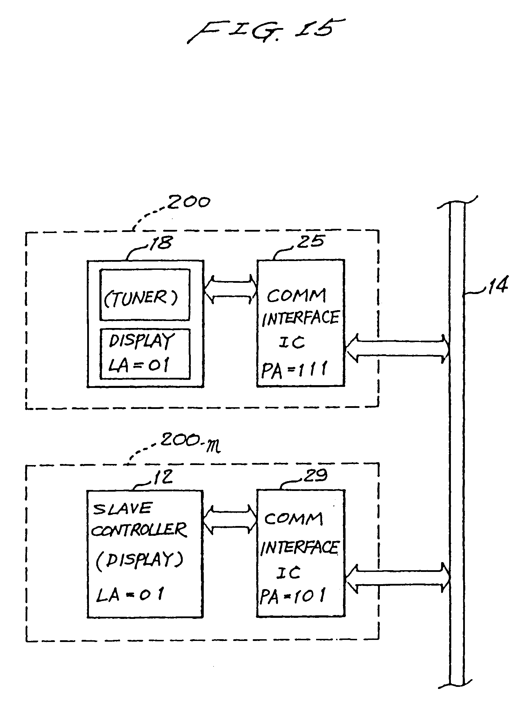

The communication interface IC 25, for example, which is divided into the communication control IC 33 and the communication driver/receiver 32, is capable of coping with different transmission mediums for the communication bus 14. In FIG. 4, the communication bus 14 is composed of a twisted pair of conductors for differential transmission. If the communication bus 14 comprises an optical communication cable 40 as shown in FIG. 5, then the communication driver/receiver 32 shown in FIG. 4 may be replaced with an electro-optical transducer 38 with the communication control IC 33 remaining unchanged. Another advantage is that since the master unit 200 fails due primarily to disturbance noise entering from the communication bus 14, only the communication driver/receiver 32 will malfunction when an excessive signal is applied thereto from the communication bus 14, and replacing the malfunction communication driver/receiver 32 with a new one will restore the master unit 200. Consequently, the maintenance of the master unit 200 and also the slave unit 200₋ₙ is relatively easy to carry out. The easy maintenance is particularly advantageous with audiovisual systems on automobiles because the master and slave units are exposed to noise induced by the automobile engines.

Furthermore, the fabrication of bipolar transistors and CMOS transistors according to different processes is easier and less expensive than the fabrication of Bi-CMOS ICs.

While only the communication interface IC 25 has been described above, each of the communication interfaces 26 - 31 of the other slave units 200₋₁ - 200₋ₙ is also divided into a communication control IC and a communication driver/receiver.

### TRANSFER FORMAT OF COMMUNICATION DATA

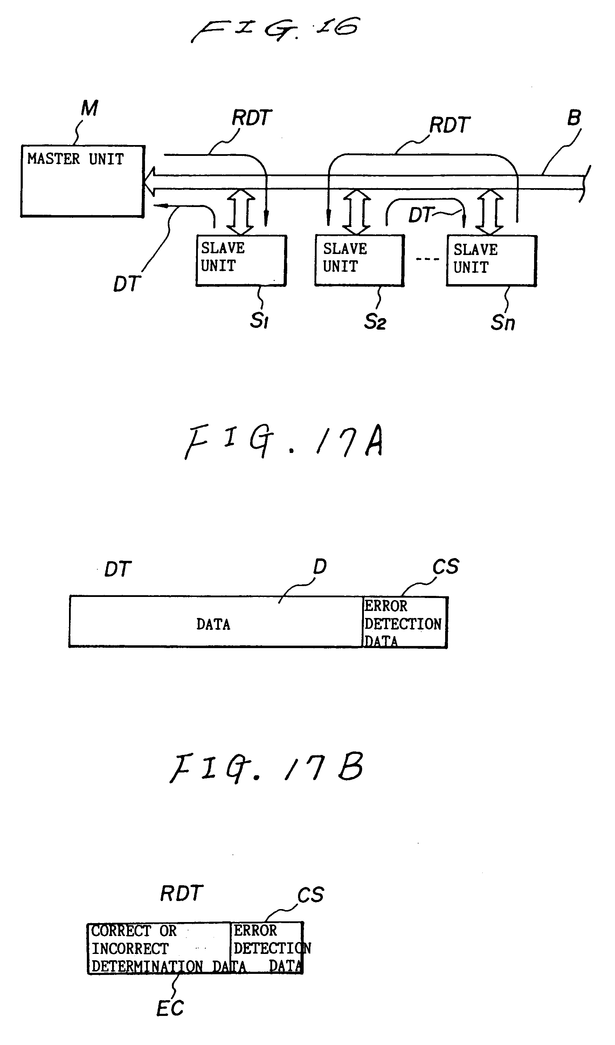

FIG. 6 shows a transfer format of the communication data DT. As shown in FIG. 6, the communication data DT comprises, from its leading end, master address data MA indicating the address of the master unit 200, slave address data SA indicating the addresses of the slave units 200₋₁ - 200₋ₙ, message length data N indicating the message length of data D, classification data TP indicating the type of the data D, and the data D itself which represents the contents to be transferred.

The master and slave address data MA and SA form address data AD, and the classification data TP and the data D form data group DG.

The arrangement of the data D varies depending on the contents of the communication data DT, i.e., the classification data TP. There are roughly three formats for the data D. As shown in FIG. 9, a first format is a format for confirming a connection, a second format is a format for keys and display data, and a third format is a format for transmitting the result of a check sum CS. The format for confirming a connection, which is used when the communication data DT is transferred from the slave units 200₋₁ - 200₋ₙ to the master unit 200, differs from that which is used when the communication data DT is transferred from the master unit 200 to the slave units 200₋₁ - 200₋ₙ. In the format for keys and display data as shown in FIG. 9, data ranging from physical status data PS to logical mode data LM are all identical, and omitted from illustration.

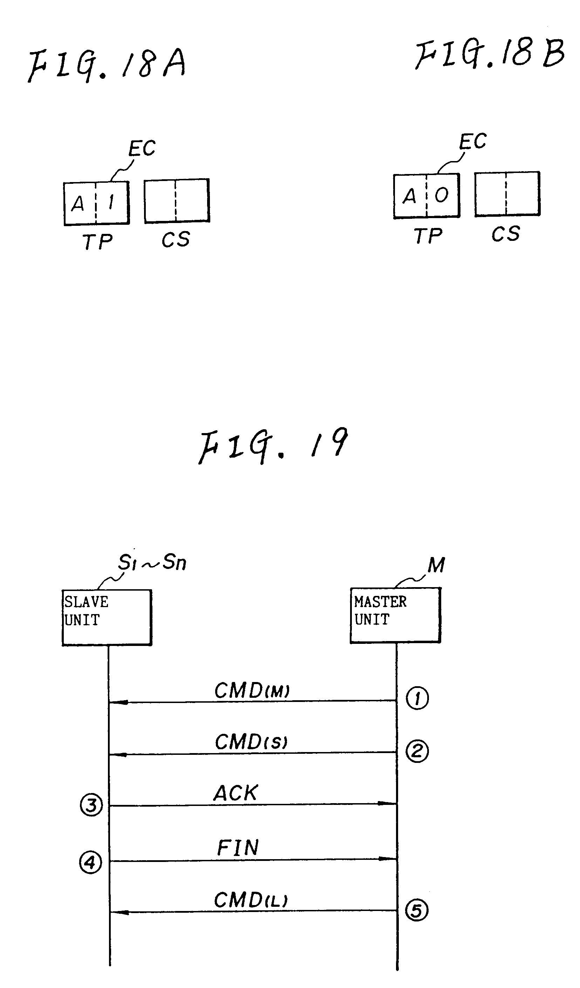

The classification data TP is positioned at the leading end of the communication data DT, and is a data area indicating the type of the data D following the classification data TP. The classification data TP is composed of major classification data and subclassification data. As shown in FIG. 7, the major classification data represents the type of the data D. If the entire classification data TP is of 8 bits, then the major classification data is allotted four high-order bits. As shown in FIG. 8, the subclassification data is mainly used to identify the format of the data D, and is allotted four low-order bits.

Talker address data TL indicates the address of a transmitting side (talker) which transmits the communication data DT.

Listener address data LN indicates the address of a receiving side (listener) which received the communication data DT.

Logical status data LS represents the status of the function corresponding to each logical address LA.

The logical mode data LM represents the operation status (mode) of the function corresponding to each logical address LA.

The chuck sum data CS is added data for detecting an error to improve the reliability of the data D.

As illustrated in FIGS. 10 and 11, the physical address data PA represents communication addresses for specifying the communication interface ICs 25 - 31 of the master unit 200 and the slave units 200₋₁ - 200₋ₙ on the communication bus 14, the addresses indicating the master unit 200 and the slave units 200₋₁ - 200₋ₙ. The physical address data PA for specifying the master unit 200 is fixed at all times. Basically, one use is allotted one physical address data PA. FIG. 13 shows an example in which the units shown in FIG. 3 are allotted physical address data. In FIG. 13, the physical address data PA are established for the master and slave controllers 18 - 24. This is because there is a case that two functional elements, such as the cassette tape deck 6 and the tuner 7, are connected to one master controller 18. If one controller has one function, then the physical address data PA and the logical address data LA indicate the same address.

The physical status data PS represents status information about the master unit 200 and the slave units 200₋₁ - 200₋ₙ, and includes data indicative of the number of function addresses (i.e., the logical address data LA, described below) that the units have.

As shown in FIG. 12, the logical address data LA is data indicative of each of the functions (i.e., the tuner and the cassette tape deck) possessed by the master unit 200 and the slave units 200₋₁ - 200₋ₙ. The logical address data LA is assigned to each function. The number of logical address data LA is not fixed because there are as many logical address data LA (e.g., LA₁, LA₂, · · ·) as there are functions possessed by the controller that is determined by the physical address data PA. FIG. 13 also shows the logical address data LA assigned to the units shown in FIG. 3.

In more detail, communication ICs 25 - 31 have communication physical addresses PA. Each of the master and slave units 200, 200₋₁, · · · 200₋₆ has a function physical address PAF and the logical address LA. The master controller 18 includes two controllers for controlling the cassette tape deck 6 and the tuner 7, and, therefore, two logical addresses LA are assigned to those two controllers. Similarly, a controller of the slave unit 200₋₃ includes a display controller and an external commander controller and, therefore, a logical address is assigned to each controller. In case that each of the controllers of slave units as shown in the units 200₋₁, 200₋₂, 200₋₄, 200₋₅ and 200₋₆ except the slave unit 200₋₃,has only one function, the logical address is equal to the function physical address.

### COMMUNICATION OPERATION

Transmission of the communication data DT between the master unit 200 and the slave units 200₋₁ - 200₋ₙ of the audiovisual system will be described below.

FIG. 14 shows a communication process by way of example. More specifically, FIG. 14 shows a specific communication process or sequence for confirming a connection when the master unit is accessed by a slave unit including TV and FM/AM tuners to confirm the connection of the slave unit to the audiovisual system.

In this network, the slave units send a self report about themselves to the master unit, unlike the conventional polling process. The master unit does not initially positively access the slave units.

First, the slave unit transmits communication data DT1 for requesting the confirmation of a connection by way of a self report, to the master unit through the communication bus 14. At this time, the communication data DT₁ includes its own physical address data PA indicated by "123H" ("H" means the hexadecimal notation), physical address data PA of the master unit, indicated by "100H", logical address data LA₁ = 05 and logical address data LA₂ = 07, which indicate that the slave unit transmitting the communication data includes the TV and FM/AM tuners (see FIG. 12). When the communication data DT₁ is received, the master unit M registers, based on the physical address data PA = 123H, the fact that the components with the functions indicated by LA₁ = 05, LA₂ = 07 are connected to the communication bus 14. These components will hereinafter be handled as audiovisual system members. In response to the received communication data DT₁, the master unit transmits return data RDT₁ back to the slave unit, indicating that the master unit has received the communication data DT₁. Then, in order to let the newly connected slave unit know the members or components of the audiovisual system, the master unit transmits system connection information DT₂ to the slave unit. When the system connection information DT₂ is received, the slave unit transmits return data RDT₂ back to the master unit to confirm the reception of the system connection information DT2. After elapse of a predetermined period of time, the slave unit transmits communication data DT₃ concerning a request fo confirming a connection (self report) again to the master unit. The communication data DT₃ is transmitted again because the connection must be confirmed periodically since the audiovisual system on the automobile is turned on and off depending on the turning-on and -off of the ACC switch.

As described above, the communication data DT includes the physical address data PA and the logical address data LA, and the physical address data PA and the logical address data LA are independent of each other. Therefore, any desired combination of physical and logical address data PA, LA may be employed to transmit communication data to any desired unit.

While communication between slave and master unit has been described above, it is also possible to transmit communication data between the slave units.

As described above, the format of the communication data DT and the allotment of addresses to the units are different between the physical address data PA and the logical address data LA. As a consequence, even if physical address data PA is unknown, a new unit can be connected arid can communicate with existing units provided logical address data LA are clearly established.

More specifically, as shown in FIG. 15, it is assumed that a new slave unit 200₋ₘ is connected to the communication bus 14. Even if the physical address data PA of the slave unit 200₋ₘ is "101" which is not assumed, provided the function of the slave unit is a display function, the same function registered in the master unit 200 exists as logical address data LA = 01, and hence the logical address data LA can be accessed. Therefore, it is possible to connect the slave unit 200₋ₘ to the master unit 200. The capability of the audiovisual system to expand itself is thus increased.

In the above embodiment, it is not necessary to establish as many initially fixed logical address data as the number of components or functions, and hence the system of communication data is simplified. When a new component or function is added, it can be connected simply by additionally establishing its physical and logical address data or only its logical address data. Therefore, the audiovisual system can be expanded easily, and a component or components can additionally be connected with increased freedom.

### [2] Second Embodiment

In data communication, it is customary to add error detecting data to the end of transmitted data in order to detect whether the transmitted data is properly sent to a destination, for increased reliability of the transmitted data. One form of such error detecting data is known as check sum data. Also in a bus-type network for bidirectional communication between the master and the slave units, check sum data is added to data transmitted from the master unit to the slave unit or vice versa, and check sum data is added to return data to be returned in response to the transmitted data.

Though the check sum data is added to the transmitted data, however, the return data does not contain any data indicative of whether the transmitted data with the check sum data added thereto is correct or not as determined by the check sum data. As a result, since the transmitting side is not given any data indicative of whether the transmitted data is correct or not, any data error associated with the transmitted data may possibly remain as it is.

According to the second embodiment, the above problem is solved by a communication system shown in FIG. 16. In FIG. 16, the communication system comprises a single master unit M and one or more slave units S₁ through Sₙ, the master unit M and the slave units S₁ through Sₙ being connected to a common communication bus B for transmitting and receiving communication data. As shown in FIGS. 17A and 17B, transmission data DT to be transmitted from one to another of the master unit M and the slave units S₁ through Sₙ, or from one to another of the slave units S₁ through Sₙ contains error detecting data CS, and return data RDT to be returned from another unit to one unit contains data EC indicative of whether the transmission data DT is correct or not as determined by the error detecting data CS.

With the above arrangement, inasmuch as the return data RDT contains the data EC that indicates whether the transmission data DT is corrected or not as determined by the error detecting data CS, the transmitting side can recognize whether the transmission data DT is correct or not. Accordingly, the reliability of data communication is increased.

Specifically, return data RDT₁, RDT₂ (FIG. 15) which acknowledge the reception of transmitted communication data DT₁, DT₂ are transmitted to a slave unit or a master unit for increased transmission reliability. The return data RDT₁, RDT₂ have a basic format as shown in FIGS. 18A and 18B.

As shown in FIGS. 18A and 18B, the return data comprises a combination of classification data TP indicating the classification of the data and check sum data CS. The check sum data CS is error detecting data for the return data itself. The classification data TP contains data EC which is data indicating whether the communication data DT₁, DT₂ (FIG. 15) are correct or not as determined by the check sum data added thereto. If they are correct, the data EC is set as an identification flag to "1" (see FIG. 18A), and if they are in error, the data EC is set as an identification flag to "0" (see FIG. 18B).

As described above, the return data RDT₁, RDT₂ that are transmitted back to the transmitting side contain independent data EC indicating whether the communication data DT₁, DT₂ are correct or not as determined by the check sum data added thereto, and also new check sum data CS for the return data RDT₁, TDT₂ themselves. Therefore, the reliability of data communication is increased.

If the return data RDT₁, RDT₂ are not returned to the transmitting side or the unit that has transmitted the communication data DT₁, DT₂ within a certain period of time, or if check sum data associated with the communication data DT₁, DT₂ indicate that they are in error (i.e., EC = "0"), then it transmits the communication data again.

The communication data described above in the second embodiment are employed in the same audiovisual system and have the same data format as those according to the first embodiment as shown in FIGS. 1 through 15.

### [3] Third Embodiment

In conventional audiovisual systems, source components such as a tape deck, a tuner, etc., as the slave units, are started, stopped, and switched over by control commands that are transmitted from a master unit to a plurality of slave units over a communication bus. When the slave units are started, stopped, or switched over, spike-like switching noise is produced. Such switching noise is prevented from being produced by muting or lowering the level of the output signal from the slave unit before the slave unit is started or stopped.

The conventional muting procedure will be described in detail below. (1) First, the master unit issues a muting command to mute the slave units. (2) Then, the master unit applies a starting or stopping command to the slave units. (3) If the slave units have correctly received the starting or stopping command, it returns an acknowledgement data ACK to the master unit. (4) Thereafter, the slave units are started or stopped, while at the same time the master unit counts a predetermined period of time (e.g., 200 msec.). (5) After the master unit has counted the predetermined period of time, it issues an unmuting command to unmute the slave units.

One problem with the conventional audiovisual system is that the steps (3), (4), and (5) above are not well synchronized with the actual operation of the slave units. More specifically, the master unit unmutes the slave units after it has counted the predetermined period of time in the steps (4) and (5). The slave units may be unmuted before they are started or stopped, or after they are started or stopped. As a consequence, if the slave units are unmuted too early, they produce noise, and if the slave units are unmuted too late, the reproduced sound from the slave units is delayed.

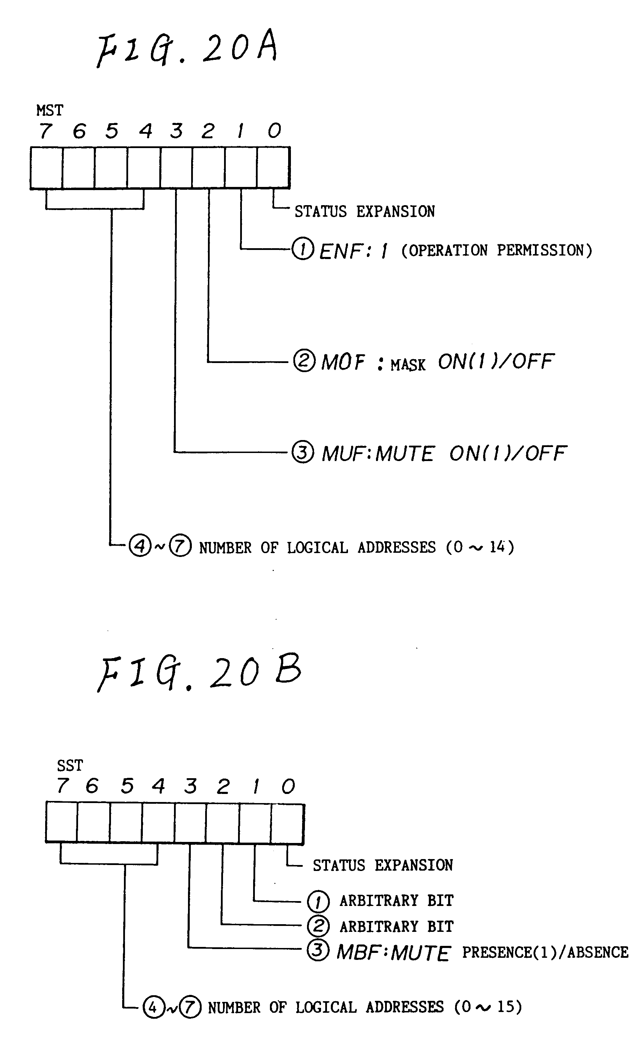

According to the third embodiment, the above problem is solved as follows: As shown in FIG. 19, an audiovisual system comprises a single master unit M and a plurality of slave units S₁ through Sₙ connected to a common communication bus B. The slave units S₁ through Sₙ are controlled in operation by a control command transmitted from the master unit M over the communication bus B, and reproduced output signals from the slave units S₁ through Sₙ are muted by a muting command CMD(M) from the master unit M. After having received the operation stop signal FIN, the master unit M issues an unmuting command CMD(L) to unmute the slave units S₁ through Sₙ.

With the above arrangement, since the slave units S₁ through Sₙ return the operation stop signal FIN when they stop their operation, the master unit M responds to the operation stop signal FIN to transmit the unmuting command CMD(L) to unmute the slave units S₁ through Sₙ. Consequently, the operation of the slave units S₁ through Sₙ is well synchronized with the unmuting operation of the master unit M, thus preventing noise from being produced or preventing reproduced sound from being unduly delayed.

In more detail, the communication procedure is carried out with respect to the muting operation. When the tape deck 6 as the slave unit 200₋₁ is to be stopped in operation, the muting operation is controlled as described below with reference to FIG.19. (1) First, the master unit issues a muting command CMD(M) to the slave unit 200₋₁ over the communication bus 14. (2) Then, the master 200 transmits an operation control command CMD(S) to stop the operation of the slave unit 200₋₁. (3) If the slave unit has correctly received the operation control command CMD(S), it returns an acknowledgement data ACK to the master unit 200. The slave unit 200₋₁ carries out a process to stop its own operation. (4) When the process to stop the operation of the slave unit 200₋₁ is completed, the slave unit 200₋₁ transmits an operation stop signal FIN to the master unit 200. (5) After having received the operation stop signal FIN, the master unit 200 transmits an unmuting command CMD(L) to the slave unit 200₋₁.

Since the master unit 200 issues the unmuting command CMD(L) on the condition that it has received the operation stop signal FIN from the slave unit 200₋₁, the master unit 200 can synchronize the unmuting operation and the operation of the slave unit 200₋₁.

In this embodiment, when the master unit 200 (see FIG. 3) transmits a unified operation command (hereinafter referred to as "unified command data") to the slave units 200₋₁ - 200₋ₙ, the master unit 200 generates master status data MST representing the contents of the unified command data, and issues the master status data MST onto the communication bus 14 at all times or periodically. An operation program for generating and issuing the master status data MST is stored in the master controller 18. The master status data MST will be described later on. The slave units 200₋₁ - 200₋ₙ are arranged to operate according to the contents of the master status data MST which has been issued onto the communication bus 14. An operation program for operating the slave units 200₋₁ - 200₋ₙ according to the master status data MST is stored in each of the slave controllers 19 - 24.

More specifically, FIGS. 20A and 20B show in detail the formats of the physical status data PS. As shown in FIGS. 20A and 20B, the physical status data PS include master status data MST issued by the master unit 200 and slave status data SST issued by the slave units 200₋₁ - 200₋ₙ.

As shown in FIG. 20A, the master status data MST has four higher-order bits representing the number of logical addresses LA, and lower-order bits representing a status expansion bit, an operation permission flag ENF, a mask-mode ON/OFF flag MOF, and a mute-mode ON/OFF flag MUF. The status expansion bit is used when there is an additional status. The operation permission flag ENF is set to "1" when the master unit 200 stops issuing an enable ON command and is operable. The mask-mode ON/OFF flag MOF represents a masking condition with respect to all the slave units 200₋₁ - 200₋ₙ and is set to "1" when a mask mode is ON. The mask mode is initiated by a mask command which prevents the master unit 200 and the slave units 200₋₁ - 200₋ₙ from detecting ON/OFF statuses of the ACC switch 101. The mute-mode ON/OFF flag MUF is a flag indicating, to all the slave units 200₋₁ - 200₋ₙ, that the entire audiovisual system is muted, and is set to "1" when the mute mode is on.

As shown in FIG. 20B, the slave status data SST has four higher-order bits representing the number of logical addresses LA, and lower-order bits representing a status expansion bit and a mute-function presence/absence flag MBF. The mute-function presence/absence flag MBF is a flag indicating whether the slave units 200₋₁ - 200₋ₙ have a mute function or not. If the slave units 200₋₁ - 200₋ₙ have a mute function, then the flag MBF is set to "1". Though not all the slave units 200₋₁ - 200₋ₙ have the mute function, almost all slave units in the form of audio sound systems have the mute function, and the display unit does not have the mute function.

According to this embodiment, as described above, the communication data DT transmitted to the slave units 200₋₁ - 200₋ₙ by the master unit 200 contains the physical status data PS. The slave units 200₋₁ - 200₋ₙ operate according to the contents of the physical status data PS in the communication data DT that is received. As a result, if the master unit 200 issues unified command data to turn on the mute mode, for example, to the slave units 200₋₁ - 200₋ₙ, the master unit 200 generates the master status data MST as shown in FIG. 20A, and issues the generated master status data MST onto the communication bus 14. The slave units which have already received the unified command data enter the mute mode. A new slave unit which has not been connected to the communication bus 14, or those slave units which have failed to receive the unified command data, do not enter the mute mode. However, since the master unit 200 transmits the physical status data PS at all times (i.e., each time the communication data DT is issued), the new slave unit can quickly enter the mute mode according to the status of the master unit 200 (i.e., the status which the audiovisual system is to take). Therefore, the audiovisual system enters the unified mode.

In this embodiment, the master unit unmutes the slave unit after having received the operation stop signal from the slave unit. Consequently, the operation of the slave units is well synchronized with the unmuting operation of the master unit, thus preventing noise from being produced or preventing reproduced sound from being unduly delayed.

The various data and commands described above in the third embodiment are employed in the same audiovisual system and have the same data format as those according to the first embodiment as shown in FIGS. 1 through 15.

### [4] Fourth Embodiment

In audiovisual systems, source components such as a tape deck, a tuner, etc., as the slave units, are started, stopped, and switched over by control commands that are transmitted from the master unit to the slave units over a communication bus.

When a command such as a starting command is transmitted to a slave unit from the master unit, the slave unit returns an acknowledge signal indicating that the command has correctively been received, and a command execution completion signal indicating that the execution of the command is completed.

Heretofore, the slave unit returns a response signal indicative of a single flag that represents two signals, that is, the acknowledge signal and the command execution completion signal. The master unit is also required to decide, on its own, what process it has to carry out next, based on the data contained in the response signal returned from the slave unit. According to one operation sequence, for example, the master unit sends a starting command to a slave unit, then the slave unit returns a response signal in response to the starting signal, and the master unit produces a beep after having received the response signal. According to this operation sequence, the master unit cannot produce a beep unless it decides for generating a beep after it has received the response signal.

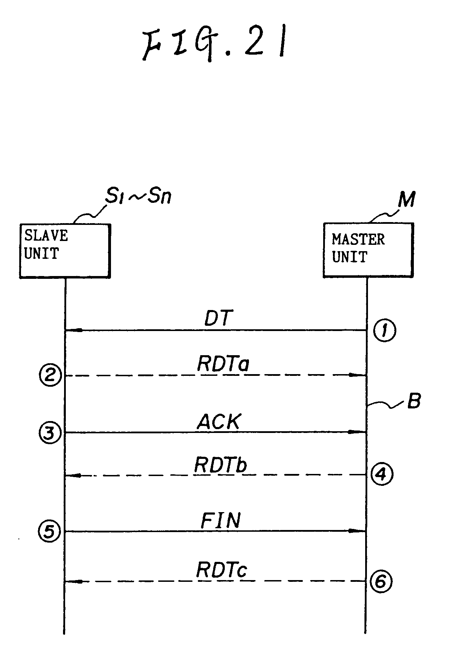

According to the fourth embodiment, the above problem is solved as follows: As shown in FIG. 21, a bus-type network comprises a single master unit M and one or more slave units S₁ through Sₙ, the master unit M and the slave units S₁ through Sₙ being connected to a common communication bus B. (1) The master unit M sends a control command DT to the slave unit S₁ through Sₙ. (2) In response to a control command DT transmitted from the master unit M over the communication bus B, the slave units S₁ through Sₙ return response signals RDTa to the master unit M. (3) the slave units S₁ through Sₙ transmit, to the master unit M, a first response signal ACK indicating that the slave units S₁ through Sₙ have received the control command DT, the first response signal ACK containing a command requesting the generation of a reception confirmation sound (beep) is transmitted to the master unit M. (4) The master unit M returns response signals RDTb to the slave unit S₁ through Sₙ. (5) Then, a second response signal FIN indicating that the execution of the contents of the control command DT is completed. (6) Finally, the master unit M returns response signals RDTc to the slave units S₁ through Sₙ.

Therefore, in response to the control command DT from the master unit M, the slave units S₁ through Sₙ return the first response signal ACK and the second response signal Fin separated therefrom.

Since the first response signal ACK contains the command for the generation of the reception confirmation sound (beep), the master unit M can execute the command for the generation of the reception confirmation sound simply by referring to the first response signal ACK. Therefore, the amount of processing operation which the master unit M is required to perform is reduced.

One switching sequence for source devices or audiovisual units will be described below with reference to FIGS. 22 through 24.

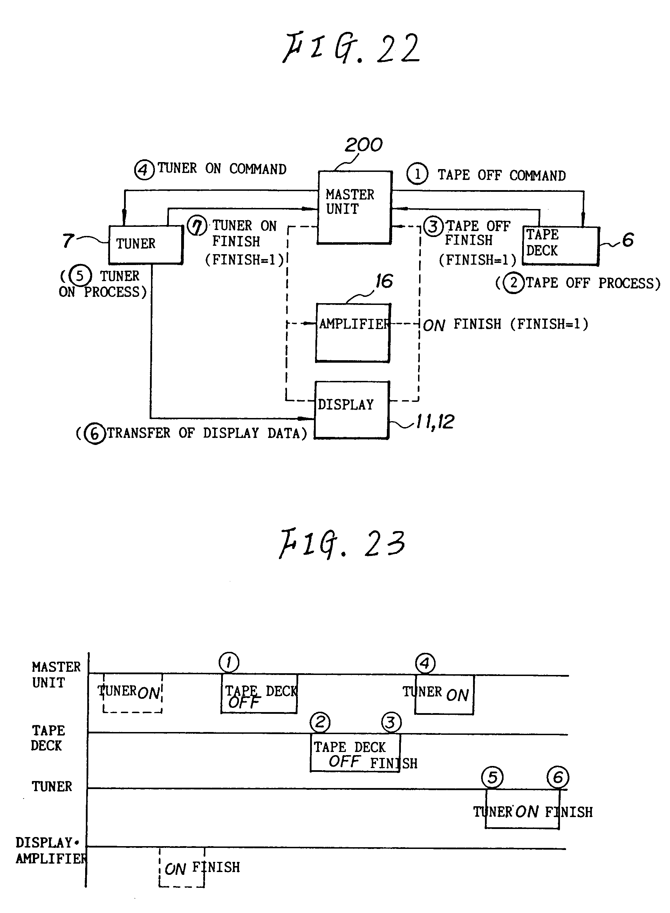

It is assumed that switching will be made from the tape deck 6 to the tuner 7. The timing of switching from the tape deck 6 to the tuner 7 is controlled by the master unit 200. Basicaly, the master unit 200 turns off the tape deck 6, and then turns on the tuner 7 after the turning-off of the tape deck 6 is completed. FIG. 22 schematically show the switching control sequence. The switching control sequence is summarized in the timing chart of FIG. 23. According to the switching sequence, (1) the master unit 200 issues a tape-deck turn-off command to the tape deck 6. (2) The tape deck 6 turns itself off. (3) Upon completion of the turning-off of the tape deck 6, the tape deck 6 returns an operation completion signal FIN to the master unit 200. (4) Then, the master unit 200 issues a tuner turn-on command to the tuner 7. (5) The tuner 7 is turned on and the display 11 or 12 and the amplifier 16 have already been turned on. (6) Display data of the tuner is transmitted to the display 11 or 12. (7) Upon completion of the turning-on of the tuner 7, the tuner 7 returns an operation completion signal FIN to the master unit 7.

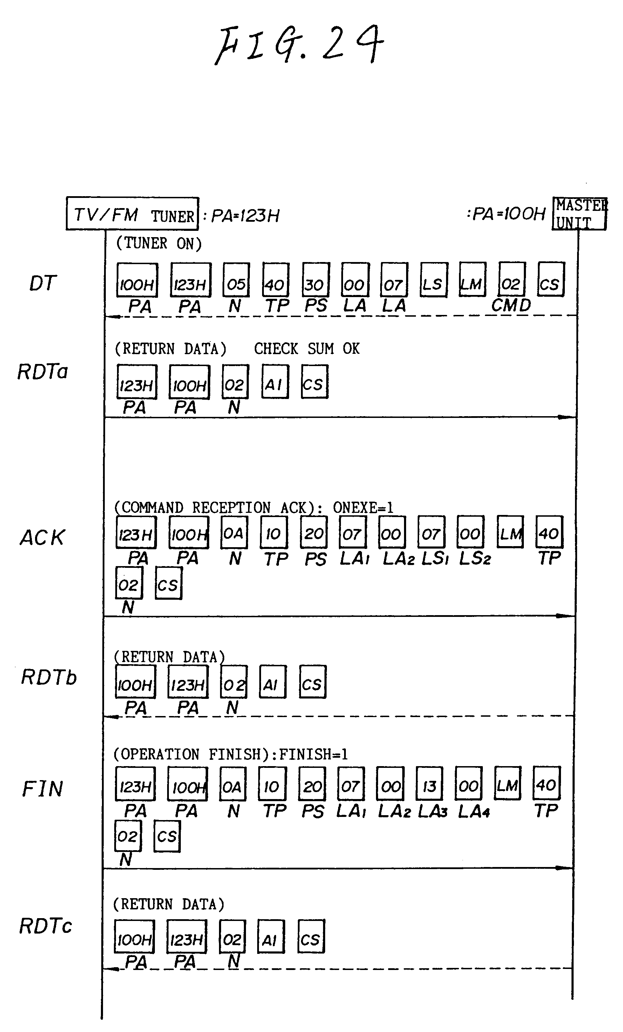

The detailed switching sequence at the time the tuner is turned on is shown by way of example in FIG. 24. The master unit 200 transmits communication data DT containing a turn-on command CMD = 02 to the tuner or slave unit. Then, if the check sum data CS of the communication data DT is correct, then the slave unit returns return data RDTa to the master unit. Then, the slave unit transmits a first response signal ACK to acknowledge the reception of the turn-on command CMD from the master unit. The first response signal ACK contains status data LS1 = 07 for requesting the generation of a reception confirmation sound (beep). Then, the master unit returns return data RDTb responsive to the first response signal ACK to the slave unit. When the operation (turning-on) instructed by the turn-on command CMD of the communication data CT is completed, the slave unit transmits a second response signal, i.e., an operation completion signal FIN, to the master unit. Responsive to the operation completion signal FIN, the master unit returns data RDTc to the slave unit.

Since the first response signal ACK contains the status data LS₁ = 07 for requesting the generation of the reception confirmation sound (beep), the master unit can perform a requested process, i.e., the generation of the reception confirmation sound, simply by referring to the status data LS₁ = 07. Heretofore, since the first and second response signals ACK, FIN are combined as a single response signal, the master unit has to decide for a next process after identifying the source of the response signal. According to the present invention, the master unit is not required to perform such a decision process, and hence the burden on the master unit is reduced.

The various data and commands described above in the fourth embodiment are employed in the same audiovisual system and have the same data format as those according to the first embodiment as shown in FIGS. 1 through 15.

The first, second third, and fourth embodiments have been shown and described above independently of each other. However, the second, third, and/or fourth embodiments may be combined with the first embodiment in any desired combinations.

## Claims

1. A method of data communication in a communication network in an automobile, including a master unit (200) and at least one slave unit (200₋₁...200₋ₙ) which are connected to a common communication bus (14), the method comprising the steps of:
allotting physical addresses (PA) to the master and slave units, respectively, the physical addresses representing the master and slave units, respectively; and
transmitting communication data to the communication bus for communication between the master and slave units; characterised by the steps of:
allotting logical addresses (LA) to the master and slave units, respectively, the logical addresses representing the functions of the master and slave units, respectively;
combining the physical and logical addresses to generate address data; and in that:
the step of transmitting communication data includes transmitting the generated address data to the communication bus.

2. A method of data communication according to claim 1, wherein the address data is transmitted, between the master and slave units (200, 200₋₁...200₋ₙ) or between the slave units, together with message length data in addition to the communication data.

3. A method of communication according to claim 1, wherein the address data is transmitted, between the master and slave units (200, 200₋₁...200₋ₙ) or between the slave units, together with classification data representing mainly a type of communication data and check sum data as error detection data.

4. A method of communication according to claim 3, wherein the classification data comprises major classification data representing a type of communication data and subclassification data for identifying the format of the communication data.

5. A method of communication according to claim 1, wherein the address data is transmitted together with check sum data as error detection data for data transmitted from one to another of the master and slave units (200, 200₋₁...200₋ₙ), return data to be returned from the another unit to the one unit containing data indicative of whether communication data is correct or not as determined by the check sum data.

6. A method of communication according to claim 1, wherein the address data is added to physical status data transmitted between the master and slave units (200, 200₋₁...200₋ₙ), the physical status data comprising master status data for representing master status and slave status data for representing slave status, the master unit transmitting the physical status data at all times or periodically so that a new slave unit can quickly enter a mode according to the status of the master unit.

7. A method of communication according to claim 5, wherein the master status data comprises data of the number of logical addresses which the master unit has, data of status expansion for additional status, data of an operation permission flag, data of a mask-mode flag and a mute-mode flag, the slave status data comprising data of the number of logical addresses which each of the slave units has, data of status expansion and data of a mute-function presence/absence flag.

8. A method of communication according to claim 1, wherein the address data is added to a control command transmitted from the master unit (200) to the slave units (200, 200₋₁...200₋ₙ) to operate the slave units according to contents of the control command, the master unit issuing an operation stop signal after having received a command execution completion signal from the slave units.

9. A method of communication according to claim 1, wherein the address data is added to a control command transmitted from the master unit (200) to the slave units (200, 200₋₁...200₋ₙ) which send separately to the master unit an acknowledge signal indicating that the command has been received correctly by the slave units and a command execution completion signal indicating that execution of the command is completed.

## Patentansprüche

1. Verfahren einer Datenkommunikation in einem Kommunikationsnetzwerk in einem Kraftfahrzeug, das eine Master-Einheit (200) und mindestens eine Hilfs-Einheit (200₋₁...200₋ₙ) umfaßt, die mit einem gemeinsamen Kommunikationsbus (14) verbunden sind, wobei das Verfahren die folgenden Schritte aufweist:
Zuordnen physikalischer Adressen (PA) jeweils zu den Master- und Hilfs-Einheiten, wobei die physikalischen Adressen jeweils die Master- und Hilfs-Einheiten darstellen; und
Übertragung von Kommunikationsdaten zu dem Kommunikationsbus für eine Kommunikation zwischen den Master- und Hilfs-Einheiten; gekennzeichnet durch folgende Schritte:
Zuordnen logischer Adressen (LA) jeweils zu den Master- und Hilfs-Einheiten, wobei die logischen Adressen die Funktionen der Master- und Hilfs-Einheiten jeweils darstellen;
Kombinieren der physikalischen und logischen Adressen, um Adressdaten zu erzeugen; und daß:
der Schritt der Übertragung von Kommunikationsdaten die Übertragung erzeugter Adressdaten zu dem Kommunikationsbus umfaßt.

2. Verfahren einer Datenkommunikation nach Anspruch 1, wobei die Adressdaten zwischen der Master- und den Hilfs-Einheiten (200, 200₋₁...200₋ₙ) oder zwischen den Hilfs-Einheiten zusammen mit Nachrichtenlängendaten zusätzlich zu den Kommunikationsdaten übertragen werden.

3. Verfahren einer Kommunikation gemäß Anspruch 1, wobei die Adressdaten zwischen der Master- und den Hilfs-Einheiten (200, 200₋₁...200₋ₙ) oder zwischen den Hilfs-Einheiten zusammen mit Klassifikationsdaten, die hauptsächlich ein Typ von Kommunikationsdaten und Prüfsummendaten als Fehlerermittlungsdaten darstellen, übertragen werden.

4. Verfahren einer Kommunikation nach Anspruch 3, wobei die Klassifikationsdaten Hauptklassifikationsdaten, die einen Typ von Kommunikationsdaten darstellen, und Unterklassifikationsdaten zur Identifizierung des Formats der Kommunikationsdaten aufweisen.

5. Verfahren einer Kommunikation nach Anspruch 1, wobei die Adressdaten zusammen mit Prüfsummendaten als Fehlerermittlungsdaten für Daten, die von einer zu der anderen der Master- und der Hilfs-Einheiten (200, 200₋₁...200₋ₙ) übertragen werden, Rückführdaten, die von der anderen Einheit der einen Einheit zurückgeführt werden sollen, die Daten aufweisen, die dafür kennzeichnend sind, ob Kommunikationsdaten korrekt sind oder nicht, wie dies durch die Prüfsummendaten bestimmt wird, übertragen werden.

6. Verfahren einer Kommunikation nach Anspruch 1, wobei die Adressdaten zu physikalischen Statusdaten hinzugefügt werden, die zwischen der Master- und den Hilfs-Einheiten (200, 200₋₁...200₋ₙ) übertragen werden, wobei die physikalischen Statusdaten Master-Statusdaten zum Darstellen eines Hasterstatus und Hilfs-Statusdaten zum Darstellen eines Hilfsstatus aufweisen, wobei die Master-Einheit die physikalischen Statusdaten zu allen Zeiten oder periodisch so überträgt, daß eine neue Hilfs-Einheit schnell in einen Modus gemäß dem Status der Master-Einheit eintreten kann.

7. Verfahren einer Kommunikation nach Anspruch 5, wobei die Master-Statusdaten Daten der Anzahl und der logischen Adressen, die die Master-Einheit besitzt, Daten einer Statuserweiterung für einen zusätzlichen Status, Daten eines Betriebserlaubniszeichens, Daten eines Masken-Modus-Zeichens und ein Dämpfungs-Modus-Zeichen aufweisen, wobei die Hilfs-Statusdaten Daten der Anzahl der logischen Adressen, die jede der Hilfs-Einheiten besitzt, Daten einer Statuserweiterung und Daten eines Dämpfungs-Funktions-Vorhandensein/Abwesenheit-Zeichens aufweisen.

8. Verfahren einer Kommunikation nach Anspruch 1, wobei die Adressdaten zu dem Steuerbefehl hinzugefügt werden, der von der Master-Einheit (200) zu den Hilfs-Einheiten (200₋₁...200₋ₙ) übertragen werden, um die Hilfs-Einheiten gemäß den Inhalten des Steuerbefehls zu betreiben, wobei die Master-Einheit ein Betriebs-Stop-Signal abgibt, nachdem sie ein Befehlausführungsabschlußsignal von den Hilfs-Einheiten empfangen hat.

9. Verfahren einer Kommunikation nach Anspruch 1, wobei die Adressdaten zu dem Steuerbefehl hinzugefügt werden, der von der Master-Einheit (200) zu den Hilfs-Einheiten (200₋₁...200₋ₙ) übertragen wird, die separat zu der Master-Einheit ein Bestätigungssignal, das anzeigt, daß der Befehl korrekt durch die Hilfs-Einheiten empfangen worden ist, und ein Befehlsausführungsabschlußsignal, das anzeigt, daß die Ausführung des Befehls abgeschlossen ist, schickt.

## Revendications

1. Procédé de communication de données dans un réseau de communication prévu dans une automobile, incluant une unité maître (200) et au moins une unité esclave (200₋₁, ... 200₋ₙ) qui sont connectées à un bus de communication commun (14), le procédé comprenant les étapes de :
allocation d'adresses physiques (PA) respectivement aux unités maître et esclaves, les adresses physiques représentant respectivement les unités maître et esclaves ; et
transmission de données de communication sur le bus de communication pour permettre une communication entre les unités maître et esclaves,
caractérisé par les étapes de :
allocation d'adresses logiques (LA) respectivement aux unités maître et esclaves, les adresses logiques représentant respectivement les fonctions des unités maître et esclaves ;
combinaison des adresses physiques et logiques pour générer des données d'adresse ; et en ce que :
l'étape de transmission de données de communication inclut la transmission des données d'adresse générées sur le bus de communication.

2. Procédé de communication de données selon la revendication 1, dans lequel les données d'adresse sont transmises, entre les unités maître et esclaves (200, 200₋₁, ... 200₋ₙ) ou entre les unités esclaves, en association avec des données de longueur de message en plus des données de communication.

3. Procédé de communication selon la revendication 1, dans lequel les données d'adresse sont transmises entre les unités maître et esclaves (200, 200₋₁, ... 200₋ₙ) ou entre les unités esclaves en association avec des données de classification représentant essentiellement un type de données de communication et des données de somme de contrôle en tant que données de détection d'erreur.

4. Procédé de communication selon la revendication 3, dans lequel les données de classification comprennent des données de classification principale représentant un type de données de communication et des données de sous-classification permettant d'identifier le format des données de communication.

5. Procédé de communication selon la revendication 1, dans lequel les données d'adresse sont transmises en association avec des données de somme de contrôle en tant que données de détection d'erreur pour des données transmises depuis l'une jusqu'à une autre des unités maître et esclaves (200, 200₋₁, ... 200₋ₙ) ; des données de retour qui doivent être retournées depuis une autre unité jusqu'à la première unité contenant des données indicatives de si oui ou non des données de communication sont correctes; tel que déterminé par les données de somme de contrôle.

6. Procédé de communication selon la revendication 1, dans lequel les données d'adresse sont ajoutées à des données de statut physique transmises entre les unités maître et esclaves (200, 200₋₁, ... 200₋ₙ), les données de statut physique comprenant des données de statut de maître pour représenter un statut de maître et des données de statut d'esclave pour représenter un statut d'esclave, l'unité maître transmettant les données de statut physique en permanence ou périodiquement de telle sorte qu'une nouvelle unité esclave puisse rapidement passer dans un mode conformément au statut de l'unité maître.

7. Procédé de communication selon la revendication 5, dans lequel les données de statut de maître comprennent des données du nombre d'adresses logiques que l'unité maître possède, des données d'extension de statut pour un statut supplémentaire, des données d'un indicateur de permission d'opération, des données d'un indicateur de mode de masque et d'un indicateur de mode silence, les données de statut d'esclave comprenant des données du nombre d'adresses logiques que chacune des unités esclaves possède, des données d'extension de statut et des données d'un indicateur de présence/absence de fonction de silence.

8. Procédé de communication selon la revendication 1, dans lequel les données d'adresse sont ajoutées à une commande de contrôle transmise depuis l'unité maître (200) aux unités esclaves (200, 200₋₁, ..., 200₋ₙ) pour faire fonctionner les unités esclaves conformément au contenu de la commande de contrôle, l'unité maître délivrant un signal d'arrêt d'opération après avoir reçu un signal de fin d'exécution de commande depuis les unités esclaves.

9. Procédé de communication selon la revendication 1, dans lequel les données d'adresse sont ajoutées à une commande de contrôle transmise depuis l'unité maître (200) aux unités esclaves (200, 200₋₁, ..., 200₋ₙ) qui envoient séparément à l'unité maître un signal d'accusé de réception indiquant que la commande a été reçue correctement par les unités esclaves et un signal de fin d'exécution de commande indiquant que l'exécution de la commande est terminée.
